# EUROPÄISCHE PATENTSCHRIFT

(11) **EP 3 216 537 B1**
(45) Veröffentlichungstag und Bekanntmachung des Hinweises auf die Patenterteilung: **23.05.2018**
(21) Anmeldenummer: 17157157.3
(22) Anmeldetag: 21.02.2017
(51) Int. Cl.: B21D 43/00, B21D 43/12, B21C 1/30, B65H 51/14

(54) **VORRICHUNG UND VERFAHREN ZUM TRANSPORTIEREN VON METALLISCHEM LANGMATERIAL**
METHOD AND DEVICE FOR TRANSPORTING LONG METALLIC MATERIAL
DISPOSITIF ET PROCÉDÉ DE TRANSPORT DE MATÉRIAU ALLONGÉ MÉTALLIQUE

(30) Priorität: 08.03.2016 DE 102016104182
(43) Veröffentlichungstag der Anmeldung: 13.09.2017
(73) Patentinhaber: Muhr und Bender KG, 57439 Attendorn (DE)
(72) Erfinder: EICHNER, Harald, 53773 Hennef (DE); SCHNEIDER, Christoph, Dr., 57368 Lennestadt-Elspe (DE); PRITZ, Stephan, 58239 Schwerte (DE)
(74) Vertreter: Neumann Müller Oberwalleney & Partner Patentanwälte

(56) Entgegenhaltungen:
- WO-A1-2010/067576
- DE-A1-102004 047 048
- JP-A- H07 275 923

## Beschreibung

Die Erfindung betrifft eine Vorrichtung gemäß dem Oberbegriff des Patentanspruchs 1 sowie das entsprechende Verfahren zum Transportieren von metallischem Langmaterial, insbesondere für Bandmaterial, Drahtmaterial, Rohrmaterial und/oder Profilmaterial.

Eine solche Vorrichtung sowie das entsprechende Verfahren wird zum Beispiel in der WO-A-2010/067576 offenbart. Aus der DE 10 2004 047 048 A1 ist eine Vorschubvorrichtung zur Zuführung von Langmaterial längs einer Vorschubvorrichtung bekannt. Die Vorschubvorrichtung hat mehrere Klemmeinrichtungen mit Klemmbacken, welche zwischen einer Klemmstellung zum Klemmen des Langmaterials und einer Lösestellung zur Freigabe des Langmaterials verstellbar ist. In der Klemmstellung ist die Klemmeinrichtung in Vorschubrichtung bewegbar.

Aus der DE 32 08 158 A1 ist eine Kettenzieh- und Kettenbremsvorrichtung bekannt, mit der Spannungen von Metallbändern konstant gehalten werden sollen. Das Metallband wird zwischen zwei gegenüberliegenden umlaufenden Kettensystemen eingespannt. Die Kettensegmente sind mit einer Beschichtung versehen, die aus elastischen Belägen mit einer zusätzlichen Profilierung gebildet sein können.

Aus der DE 40 09 862 A1 ist eine Vorrichtung zum Ziehen und Bremsen von Metallbändern bekannt. Die Vorrichtung besteht aus zwei in einem Gerüst einander gegenüberliegenden endlos über einer Antriebsrolle und einer Umlenkrolle umlaufenden bandförmigen Spannelementen, zwischen denen das Metallband eingespannt ist. Die Spannelemente sind in Form von Endlosmetallbändern aus einer Titan-Aluminium-Legierung gestaltet. Um Relativbewegungen zwischen dem Metallband und den umlaufenden Titanbändern auszuschließen, sind die Titanbänder mit einem Reibbelag versehen. Als Reibbelag wird ein Elastomer vorgeschlagen. Die Antriebsrollen der beiden Spannelemente werden von Antriebsaggregaten angetrieben.

Aus der DE 299 09 850 U1 ist eine Vorrichtung zum Ziehen und Bremsen von Metallbändern bekannt. Das Metallband wird zwischen zwei einander gegenüberliegende Rollenblöcke eingespannt und geführt, die von Kettenrädern angetrieben werden. Es sollen sich Geschwindigkeiten von beispielsweise bis 1.500 m/min erreichen lassen.

Bei bekannten Zieh- oder Bremsvorrichtungen ist eine wichtige Voraussetzung für das Funktionieren eine konstante Prozessgeschwindigkeit. Allenfalls kleine Geschwindigkeitsunterschiede zwischen der Zug- und der Druckseite des Bandmaterials lassen sich aufgrund elastischer Reibbacken oder durch Gleitreibung zwischen der Vorrichtung und dem Metallband kompensieren.

Der vorliegenden Erfindung liegt die Aufgabe zugrunde, eine Transportvorrichtung für metallisches Langmaterial vorzuschlagen, die in Prozessrichtung des Langmaterials eine hohe Variabilität im Hinblick auf die Bewegungskinematik ermöglicht. Die Aufgabe besteht weiter darin, ein entsprechendes Verfahren vorzuschlagen, das eine Möglichkeit zum Ausgleich bei auftretenden Inkonsistenzen während des Bearbeitungsprozesses des Langmaterials bietet. Weiter soll eine Anlage vorgeschlagen werden, die einen Ausgleich unterschiedlicher Weglängen beziehungsweise Geschwindigkeiten ermöglicht.

Eine Lösung besteht in einer Vorrichtung zum Transportieren von metallischem Langmaterial, insbesondere Bandmaterial, Drahtmaterial, Rohrmaterial oder Profilmaterial, umfassend: eine steuerbare erste Kettenantriebseinheit mit einer endlosen ersten Kette; eine steuerbare zweite Kettenantriebseinheit mit einer endlosen zweiten Kette; wobei die erste und zweite Kettenantriebseinheit so angeordnet sind, dass das Langmaterial zwischen der ersten und zweiten Kette unter Reibkontakt hindurchgeführt wird, so dass das Langmaterial bei Betrieb der ersten und zweiten Kettenantriebseinheiten in Bewegungsrichtung der mit dem Langmaterial in Kontakt befindlichen Kettenabschnitte bewegt wird; eine steuerbare erste Anpresseinheit, die ausgestaltet ist, um eine erste Anpresskraft auf die erste Kette in Richtung zum Langmaterial auszuüben; eine steuerbare zweite Anpresseinheit, die ausgestaltet ist, um eine zweite Anpresskraft auf die zweite Kette in Richtung zum Langmaterial auszuüben; zumindest eine steuerbare Stelleinheit, die mit zumindest einer der ersten und zweiten Kettenantriebseinheiten mechanisch verbunden ist und ausgestaltet ist, um diese bei Betrieb in Längsrichtung des Langmaterials zu bewegen.

Ein Vorteil der Vorrichtung ist, dass unterschiedliche Kräfte beziehungsweise Zugniveaus auf den beiden Prozessseiten, das heißt zwischen dem Einlauf und dem Auslauf des Langmaterials, mittels der zumindest einen Stelleinheit eingestellt werden können. Als Einlauf wird dabei der Bereich des Langmaterials bezeichnet, der in Vorschubrichtung vor der Transportvorrichtung liegt. Entsprechend wird unter Auslauf der Bereich des Langmaterials verstanden, der in Vorschubrichtung hinter der Transportvorrichtung liegt. Die zumindest eine Stelleinheit bieten damit in vorteilhafter Weise eine Ausgleichsmöglichkeit der Weglängen und/oder Geschwindigkeiten zwischen dem Einlauf und dem Auslauf des Langmaterials. Mit zumindest einer Stelleinheit ist im Rahmen der vorliegenden Offenbarung insbesondere gemeint, dass eine Stelleinheit vorgesehen sein kann, die auf beide Kettenantriebseinheiten einwirkt, um diese gemeinsam zu bewegen, oder, dass je Kettenantriebseinheit eine zugehörige Stelleinheit vorgesehen ist.

Die mindestens eine Stelleinheit kann mindestens eine Kettenanordnung relativ zu einem ortsfesten Bauteil bewegen und damit den Vorschub des Langmaterials beeinflussen. Dabei überlagern sich die von den Kettenantriebseinheiten auf das Langmaterial übertragenen Bewegungen und die von der mindestens einen Stelleinheit auf die Kettenantriebseinheiten übertragenen Bewegungen zu einer resultierenden Bewegung des Langmaterials. Hinsichtlich der Transportbewegung des Langmaterials ist insbesondere vorgesehen, dass diese kontinuierlich aber mit variabel steuerbarer Geschwindigkeit erfolgt. Die Vorrichtung kann auch als Zug- und Transportsystem mit Geschwindigkeits- und Wegausgleich für Langprodukte bezeichnet werden.

Unter metallischem Langmaterial wird im Rahmen der vorliegenden Offenbarung ein metallisches Material verstanden, dass in einer Haupterstreckungsrichtung (Längsrichtung) eine wesentlich, beispielsweise mindestens zehnfach, größere Ausdehnung aufweist als in einer anderen Erstreckungsrichtung. Insbesondere soll der Begriff Langmaterial ein Band-, Draht oder Profilmaterial aus einem metallischen Werkstoff umfassen. Als metallischer Werkstoff kommen alle als Langmaterial bearbeitbaren Werkstoffe in Frage, beispielsweise Stahl, Edelstahl, Leichtmetall wie Aluminium, Buntmetalle wie Kupfer, Messing oder Bronze, sowie Legierungen mit mehreren metallischen Bestandteilen. Auch die Verarbeitung von Langmaterial aus Kunststoff ist prinzipiell denkbar.

Die erste und zweite Kettenantriebseinheit sind nach einer bevorzugten Ausführungsform hinsichtlich Aufbau und Funktionsweise gleich aufgebaut. Es versteht sich daher, dass alle im Rahmen der vorliegenden Offenbarung in Bezug auf eine der beiden Kettenantriebseinheiten beschriebenen Einzelheiten gleichermaßen auch für die zweite Kettenantriebseinheit gelten können, sofern nichts anderes gesagt ist. Dies gilt im Übrigen auch für die erste und zweite Anpresseinheit sowie - sofern zwei separate Stelleinheiten vorgesehen sind - auch für diese, welche ebenfalls hinsichtlich Aufbau und Funktionsweise untereinander gleich aufgebaut sein können.

Die Kettenantriebseinheiten umfassen vorzugsweise jeweils einen separaten Motor zum Antreiben der Kettenanordnung. Die Kettenanordnung umfasst eine Vielzahl von miteinander verbundenen Kettengliedern und ist als endlose Kette gestaltet. Ferner können die beiden Kettenantriebseinheiten jeweils einen Träger, eine Antriebsrolle und eine Umlenkrolle aufweisen, um welche die endlose Kette umlaufend angeordnet ist. Die Antriebsrolle und die Umlenkrolle sind mit Abstand zu einander an dem ersten Träger drehbar gelagert. Die Antriebsrolle, welche vom Motor drehend antreibbar ist, ist mit der Kette vorzugsweise formschlüssig in Eingriff, um Drehmoment von dem Motor auf die Kette zu übertragen. Der Motor kann beispielsweise in Form einer elektrischen oder hydraulischen Maschine gestaltet sein. Je Kettenantriebseinheit ist vorzugsweise ein separater Motor vorgesehen, welcher die jeweilige Kettenanordnung drehend antreibt. Der Motor zum Antreiben der ersten Kettenanordnung und der Motor zum Antreiben der zweiten Kettenanordnung sind dabei steuerungstechnisch vorzugsweise synchronisiert, so dass die beiden Ketteneinheiten mit gleicher Umlaufgeschwindigkeit bewegt werden.

Nach einer Ausführungsform weist eine Kettenanordnung eine Mehrzahl von umfangsverteilten Reibkörpern auf. Die Reibkörper sind so gestaltet, dass sie bei umlaufender Bewegung der Kettenanordnung mit dem Langmaterial in Reibkontakt kommen und das so zwischen den beiden gegenüberliegenden Kettenanordnungen eingespannte Langmaterial in Vorschubrichtung bewegen. Ein oder mehrere Reibkörper können jeweils an einem der Kettenglieder angeordnet sein. Es ist insbesondere vorgesehen, dass die Reibkörper jeweils einen Reibbelag aufweisen, der so auf das Material des Langmaterials abgestimmt ist, dass zwischen dem Reibbelag und dem Langmaterial Haftreibung erzeugt wird. Durch eine Abstimmung der Kräfte und Werkstoffe der an der Bewegung beteiligten Bauteile derart, dass im Wesentlichen nur Haftreibung am Langmaterial entsteht, wird der Verschleiß gering gehalten und die Oberfläche des Langmaterials geschont.

Nach einer möglichen Konkretisierung kann der Reibbelag metallische Bestandteile wie Kupfer, Messing, Eisen, Grauguss, jeweils als Pulver oder Fasern, Mineralfasern und/oder Sulfide von Eisen, Kupfer, Antimon, Zink, Zinn, Molybdän aufweisen. Es versteht sich, dass auch andere Werkstoffe für den Reibbelag denkbar sind, beispielsweise Kunststoffe beziehungsweise Gummi.

Die Kettenanordnungen der beiden Antriebseinheiten werden jeweils von einer zugehörigen Anpresseinheit in Richtung zum Langmaterial kraftbeaufschlagt, damit Reibungskräfte zwischen den Reibkörpern und dem Langmaterial aufgebaut werden. Eine Anpresseinheit kann mehrere parallel nebeneinander liegende Rollenkörper aufweisen, die an einer Trägerplatte drehbar gelagert sind. Die Rollenkörper können mit einer dem Langmaterial abgewandten Seite der Kettenglieder in Anlage gebracht werden und diese in Richtung zum Langmaterial beaufschlagen. Dabei ist insbesondere vorgesehen, dass eine erste Anpresseinheit und eine zweite Anpresseinheit einander gegenüberliegend angeordnet sind, wobei die von den beiden Anpresseinheiten mittelbar auf das Langmaterial einwirkenden Kräfte aufeinander zu gerichtet sind. Die Anpresskräfte werden durch zumindest einen Stellantrieb, beispielsweise durch eine hydraulische Maschine, erzeugt. Nach einer ersten Möglichkeit der mindestens eine Stellantrieb an einem ortsfesten Bauteil abgestützt sein. Alternativ kann der mindestens eine Stellantrieb an den beiden einander gegenüberliegenden Anpresseinheiten abgestützt sein, so dass diese bei Betätigung des Stellantriebs direkt gegeneinander beaufschlagt werden.

Der Stellantrieb kann auf die Trägerplatte einwirken um diese nach Bedarf stärker oder weniger stark in Richtung Langmaterial zu beaufschlagen. Nach einer Ausgestaltung kann vorgesehen sein, dass die erste Anpresseinheit und die zweite Anpresseinheit an einem stehenden Bauteil, beispielsweise einem Gestell, in Vorschubrichtung des Langmaterials ortsfest gehalten sind. Eine Bewegung der Anpresseinheiten wäre demnach nur in Normalrichtung, also auf das Langmaterial zu oder von diesem weg, möglich. Die von dem beziehungsweise den Stellantrieben erzeugbare Anpresskraft ist vorzugsweise individuell einstellbar und variabel steuerbar. Insbesondere kann die Anpresskraft einer beziehungsweise beider Anpresseinheiten unabhängig von der Antriebsgeschwindigkeit der Kettenanordnungen und der Position beziehungsweise Bewegung der Stelleinheit erfolgen.

Nach einer Ausführungsform ist die zumindest eine Stelleinheit jeweils an einem stehenden Bauteil abgestützt. Durch Betätigen der Stelleinheit wird eine Kraft in Haupterstreckungsrichtung des Langmaterials auf die mit der Stelleinheit verbundene Kettenantriebseinheit ausgeübt. Mit Haupterstreckungsrichtung des Langmaterials ist in diesem Zusammenhang in oder entgegen der Vorschubrichtung des Langmaterials gemeint, das heißt in Längsrichtung. Das stehende Bauteil, an dem die Stelleinheit abgestützt beziehungsweise befestigt ist, kann beispielsweise ein ortfestes Gestell der Vorrichtung sein.

Die Stelleinheit kann einen Linearantrieb umfassen, der insbesondere in Form einer hydraulischen Kolben-Zylinder-Einheit gestaltet sein kann. Eine hydraulische Stelleinheit hat den Vorteil, dass diese dynamisch schnell steuerbar ist. In Konkretisierung kann ein erster Abschnitt des Linearantriebs mit dem stehenden Bauteil verbunden sein und ein zweiter Abschnitt mit der zugehörigen Kettenantriebseinheit. Die Geschwindigkeit beziehungsweise Position des Linearantriebs ist variabel einstellbar. Durch Betätigung der Stelleinheit kann die zugehörige Kettenantriebseinheit relativ zum ortfesten Bauteil bewegt werden, das heißt in oder entgegen der Vorschubrichtung des Langmaterials. Wird die Stelleinheit derart gesteuert, dass die Antriebseinheit in Vorschubrichtung bewegt wird, wird an der Einlaufseite des Langmaterials eine höhere Zugkraft erzeugt als an der Auslaufseite. Umgekehrt, das heißt, wenn die Antriebseinheit von der Stelleinheit entgegen der Vorschubrichtung bewegt wird, ist die Zugkraft an der Einlaufseite niedriger als an der Auslaufseite. Die beiden Antriebseinheiten können in dem ortsfesten Bauteil in Haupterstreckungsrichtung des Langmaterials mittels geeigneter Führungen längsverschiebbar geführt sein.

Nach einer bevorzugten Ausgestaltung ist eine Steuereinheit zum Steuern der Vorschubgeschwindigkeit und/oder der Zugkraft des Langmaterials vorgesehen. Vorzugsweise ist genau eine Steuereinheit vorgesehen, welche die beiden Stelleinheiten, die beiden Antriebseinheiten und die zumindest eine Anpresseinheit steuert und für diese Zwecke mit den genannten Einheiten steuerungstechnisch verbunden ist. Dabei ist insbesondere vorgesehen, dass jede einzelne Steuerungsgröße von der Steuereinheit individuell eingestellt werden kann. Ferner sind die einzelnen Steuerungsgrößen vorzugsweise stufenlos zwischen einem Maximalwert und einem Minimalwert einstellbar.

Für eine gleichmäßige Krafteinleitung beziehungsweise gleichmäßige Bewegung des Langmaterials ist es vorteilhaft, wenn die beiden Kettenantriebseinheiten synchron angetrieben werden, das heißt, dass an der Oberseite des Langmaterials und an der Unterseite des Langmaterials dieselben Kräfte und Geschwindigkeiten anliegen. Dasselbe gilt vorzugsweise entsprechend auch für die Steuerung der beiden Anpresseinheiten und/oder die Steuerung der beiden Stelleinheiten, sofern zwei Stelleinheiten vorgesehen sind.

Nach einer Konkretisierung können zumindest einige Komponenten oder Bauteile der ersten und/oder zweiten Antriebseinheit aus Leichtbaumaterial, insbesondere aus Leichtmetall oder faserverstärktem Kunststoffmaterial hergestellt sein. Die Verwendung von Leichtbaumaterial wird durch eine Entkoppelung der Stellkinematik beziehungsweise der Betätigungskräfte der drei Einheiten begünstigt. Durch Herstellung einzelner Komponenten oder Bauteile in Leichtbauweise ist die zum Betreiben der Anlage nötige Energie gering.

Die Lösung der oben genannten Aufgabe besteht weiter in einer Anlage zur Verarbeitung von metallischem Langmaterial, mit zumindest einem Werkzeug zum kontinuierlichen Bearbeiten des metallischen Langmaterials in einer Vorschubrichtung des Langmaterials, und einer Vorrichtung zum Transportieren des Langmaterials, die zumindest eine der oben genannten Ausgestaltungen aufweist.

Die Anlage bietet dieselben Vorteile, die oben bereits im Zusammenhang mit der Vorrichtung aufgeführt worden sind und auf die hier abkürzend verwiesen wird. Die Vorrichtung ermöglicht es, Geschwindigkeits- beziehungsweise Wegunterschiede zwischen unterschiedlichen Anlagenteilen, beispielsweise zwischen einem vor und einem hinter der Vorrichtung angeordneten Anlagenteil, auszugleichen. Durch den Einsatz der Vorrichtung können zwei aufeinander folgende Verarbeitungsprozesse des Langmaterials, die unterschiedliche Vorschubgeschwindigkeiten aufweisen, durchgeführt werden.

Die Vorrichtung zum Transportieren kann nach einer ersten Möglichkeit in Vorschubrichtung des Langmaterials hinter dem Werkzeug angeordnet sein, so dass die Vorrichtung eine Zugkraft auf das Langmaterial ausübt, mit der das Langmaterial durch das Werkzeug gezogen wird. Nach einer zweiten Möglichkeit kann die Vorrichtung in Vorschubrichtung des Langmaterials auch vor dem Werkzeug angeordnet sein, so dass die Vorrichtung in Bezug auf das Werkzeug eine Druckkraft auf das Langmaterial ausübt, mit der das Langmaterial durch das Werkzeug gedrückt wird. Wie oben erläutert, kann die Vorrichtung auch zwischen zwei Werkzeugen angeordnet sein, die auch als Anlagenteile bezeichnet werden können.

Das Werkzeug kann prinzipiell jedes beliebige Werkzeug zum Bearbeiten von Langmaterial sein, beispielsweise ein Walzwerkzeug, Schneidwerkzeug, Beschichtungswerkzeug, Profilierwerkzeug und/oder Prägewerkzeug. Besonders eignet sich die Vorrichtung im Zusammenwirken mit einem Walzwerkzeug, bei dem eine Dickenreduktion des Bandmaterials erfolgt, was zu unterschiedlichen Geschwindigkeiten zwischen Ein- und Auslauf des Walzwerkzeugs führt. Eine Sonderform des Walzens stellt das Flexible Walzen dar, bei dem das Bandmaterial eine variable Blechdicke über der Länge erhält. Hiermit verbunden ist bei variabler Einlaufgeschwindigkeit eine nahezu konstante Geschwindigkeit des flexibel gewalzten Bandmaterials auf der Auslaufseite des Walzwerkzeugs. Insofern eignet sich die Vorrichtung insbesondere in einem Flexiblen Walzwerkzeug als vorgelagerte und/oder nachgelagerter Anordnung. Mit nahezu konstanter Geschwindigkeit am Auslauf sollen Geschwindigkeitsänderungen von bis zu 5 % mit umfasst sein.

Die Lösung der oben genannten Aufgabe besteht weiter in einem Verfahren zum Transportieren von metallischem Langmaterial, insbesondere Bandmaterial, Drahtmaterial, Rohrmaterial oder Profilmaterial, mittels einer Vorrichtung mit zwei Kettenantriebseinheiten, zwischen denen das Langmaterial unter Reibkontakt durchgeführt wird, zwei Anpresseinheiten zum Druckbeaufschlagen von Kettenabschnitten gegen das Langmaterial sowie zumindest einer Stelleinheit zum Verschieben der Kettenantriebseinheiten in Längsrichtung des Langmaterials, mit den Schritten:
Antreiben der zwei Kettenantriebseinheiten, wobei Reibkörper der zwei Kettenantriebseinheiten mit dem Langmaterial in Reibkontakt treten, so dass das Langmaterial zwischen einander gegenüberliegenden Reibkörpern eingespannt und gemeinsam mit diesen bewegt wird; Ermitteln zumindest einer den Transport des Langmaterials beeinflussenden physikalischen Prozessgröße des Langmaterials vor und/oder hinter der Vorrichtung; Berechnen einer den Transport des Langmaterials beeinflussenden physikalischen Sollgröße des Langmaterials unter Berücksichtigung der ermittelten physikalischen Prozessgröße; und Steuern der zumindest einen Stelleinheit auf Basis der berechneten physikalischen Sollgröße derart, dass die zwei Kettenantriebseinheiten in Längsrichtung des Langmaterials relativ zu einem ortsfesten Bauteil variabel verstellt werden, wobei eine von den zwei Kettenantriebseinheiten auf das Langmaterial übertragene erste Bewegung und eine von der zumindest einen Stelleinheit auf die zwei Kettenantriebseinheiten übertragene zweite Bewegung einander überlagern und eine resultierende Bewegung des Langmaterials bewirken.

Mit dem Verfahren ergeben sich die bereits oben erwähnten Vorteile eines Geschwindigkeits- und Wegeausgleichs zwischen Anlagenteilen zur Bearbeitung von Langprodukten.

Nach einer Konkretisierung kann eine erste physikalische Prozessgröße vor der Vorrichtung ermittelt werden, beispielsweise die Einlaufgeschwindigkeit und/oder die Einlaufkraft des Langmaterials; und es kann eine zweite physikalische Prozessgröße hinter der Vorrichtung ermittelt werden, beispielsweise die Auslaufgeschwindigkeit und/oder die Auslaufkraft des Langmaterials.

Als weiterer Verfahrensschritt kann vorgesehen sein, dass zur Steuerung des von den zwei Anpresseinheiten mittelbar auf das Langmaterial ausgeübten Anpressdrucks die erste und zweite physikalische Prozessgröße berücksichtigt werden.

Vorzugsweise werden die zwei Kettenantriebseinheiten, die zwei Anpresseinheiten und die zumindest eine Stelleinheit jeweils unabhängig voneinander gesteuert.

Insgesamt kann die Vorrichtung mit dem Verfahren so gesteuert werden, dass die Geschwindigkeit und/oder Kraft des Langmaterials an die Erfordernisse der vor und/oder nachgelagerten Prozesse in geeigneter Weise angepasst ist. Beispielsweise kann die zumindest eine Stelleinheit so gesteuert werden, dass auf einer Seite, das heißt der Ein- oder Auslaufseite, die auf das Langmaterial wirkende Längskraft null beträgt, und auf der anderen Seite die für den jeweiligen Prozess erforderliche Sollzugkraft anliegt. Die Einstellung einer Zugkraft null hat den Vorteil, dass keine weitere Vorrichtung zum Aufbringen eines Grundzugs nötig ist. Es versteht sich, dass sich auch andere zwischen null und der Sollkraft liegende Zugkräfte einstellen lassen.

Eine bevorzugte Ausführungsform wird nachstehend anhand der Zeichnungsfiguren erläutert. Hierin zeigt
- Figur 1: eine erfindungsgemäße Vorrichtung zum Transportieren von Langmaterial in einer ersten Arbeitsstellung;
- Figur 2: die Vorrichtung nach Figur 1 in einer zweiten Arbeitsstellung.

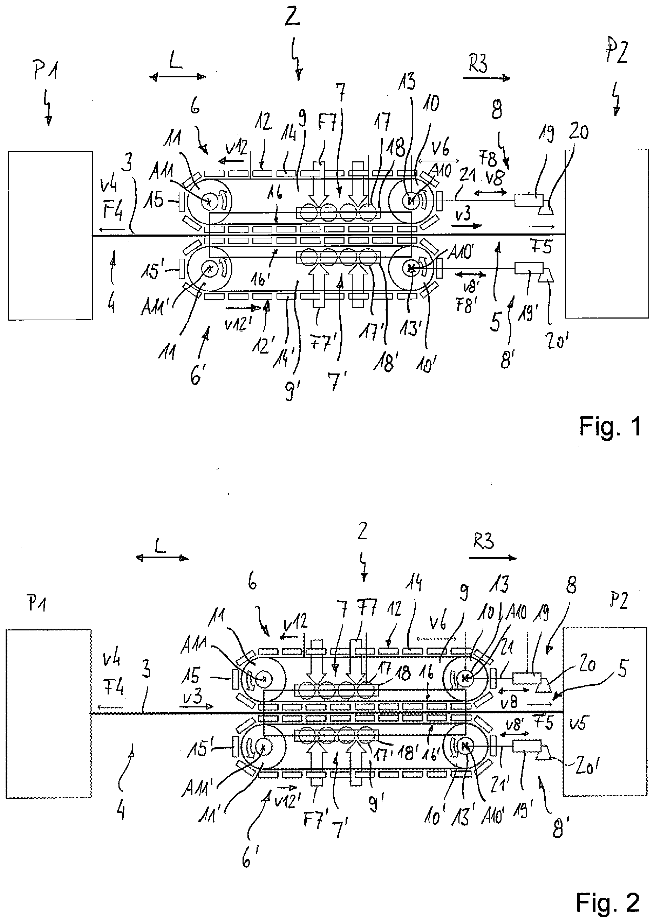

Die Figuren 1 und 2, welche nachstehend gemeinsam beschrieben werden, zeigen eine erfindungsgemäße Vorrichtung 2 zum Transportieren von Langmaterial 3, die auch als Transportvorrichtung bezeichnet wird. Die Vorrichtung 2 ist bei der vorliegenden Ausführungsform zwischen zwei Bearbeitungsprozessen P1, P2 angeordnet. Dabei wird das Langmaterial in dem ersten Bearbeitungsprozess P1, welcher der Transportvorrichtung in Vorschubrichtung des Langmaterials 3 vorgeschaltet ist, auf eine erste Weise bearbeitet und in einem der Transportvorrichtung 2 nachgelagerten zweiten Bearbeitungsprozess P2 auf eine zweite Weise.

Als Langmaterial wird ein Material verstanden, dass in einer Haupterstreckungsrichtung (Längsrichtung L) eine mindestens zehnfach größere Ausdehnung aufweist als in einer zweiten Erstreckungsrichtung (Breiten- beziehungsweise Dickenrichtung). Insbesondere kann das Langmaterial ein Band-, Draht, Rohr- oder Profilmaterial aus einem metallischen Werkstoff sein. Als metallischer Werkstoff kann beispielsweise Stahl, Edelstahl, Leichtmetall wie Aluminium, Buntmetall wie Kupfer, Messing und Bronze, sowie Legierungen mit mehreren metallischen Bestandteilen verwendet werden.

Die Bearbeitungsprozesse P1, P2 beziehungsweise die Ausgestaltung der hierfür verwendeten Werkzeuge hängen von der Art des Langmaterials 3 ab. Bei Verwendung von metallischem Bandmaterial als Langmaterial kann zumindest einer der beiden Bearbeitungsprozesse P1, P2, oder beide, beispielsweise ein Walz-, Schneid-, Beschichtungs-, Profilier- und/oder Prägeprozess sein. Dabei können die beiden Bearbeitungsprozesse P1, P2 kurzzeitig unterschiedliche Verarbeitungsgeschwindigkeiten zur Bearbeitung des Langmaterials aufweisen. Beispielsweise kann ein Walzprozess kurzzeitig schneller oder langsamer durchgeführt werden als ein nachgelagerter Schneidprozess.

Die zwischen den beiden Bearbeitungsprozessen P1, P2 angeordnete Vorrichtung 2 ermöglicht eine auf die jeweiligen Bearbeitungsprozesse P1, P2 abgestimmte variable Einstellung der am Einlauf 4 beziehungsweise am Auslauf 5 der Transportvorrichtung auf das Langmaterial 3 wirkenden Kräfte F4, F5.

Vorliegend ist die Transportvorrichtung 2 in einer Anordnung zwischen zwei Bearbeitungsprozessen P1, P2 gezeigt. Es versteht sich jedoch, dass auch eine Verwendung der Vorrichtung 2 in einer Anordnung mit nur einem Bearbeitungsprozess beziehungsweise nur einem Anlagenteil denkbar ist. Beispielsweise kann die Vorrichtung 2 vor oder hinter einem einzelnen Bearbeitungswerkzeug zum Bearbeiten des Langmaterials 3 angeordnet sein. Dabei kann die Vorrichtung 2 aufgrund der Eigenschaft, eine Zugkraft auf das Langmaterial aufbringen zu können, als Ersatz eines sonst üblichen Haspels dienen.

Nachstehend wird der Aufbau und die Funktionsweise der Vorrichtung 2 als solcher weiter erläutert. Die Vorrichtung 2 weist mehrere funktionale Einheiten auf, die jeweils paarweise zusammenwirken, nämlich eine erste und zweite Kettenantriebseinheit 6, 6', eine erste und zweite Anpresseinheit 7, 7' und eine erste und zweite Stelleinheit 8, 8'. Es ist ferner eine Steuerungseinheit (nicht dargestellt) zur Steuerung von den Transport beeinflussenden Prozessparametern, insbesondere der Vorschubgeschwindigkeit v3 und/oder der Zugkraft F4, F5 des Langmaterials 3 vorgesehen.

Die beiden Kettenantriebseinheiten 6, 6' weisen jeweils einen Träger 9, 9', eine Antriebsrolle 10, 10', eine Umlenkrolle 11, 11', eine endlose Kette 12, 12' und einen Motor 13, 13' auf. Die Antriebsrolle 10, 10' und die Umlenkrolle 11, 11' sind mit Abstand zu einander an dem Träger 9, 9' um Drehachsen A10, A11 drehbar gelagert. Die Antriebsrolle 10, 10' ist vom zugehörigen Motor 13, 13' drehend antreibbar ist und überträgt vom Motor eingeleitetes Drehmoment auf die jeweilige Kette 12, 12'. Hierfür können an der Antriebsrolle 10, 10' geeignete Formeingriffsmittel vorgesehen sein, welche in gegengleiche Formeingriffsmittel der Kette 12, 12' formschlüssig eingreifen. Der Motor 13, 13' kann beispielsweise ein Elektro- oder Hydraulikmotor sein. Für einen gleichmäßigen Antrieb beziehungsweise eine gleichmäßige Krafteinleitung an der oberen und unteren Seite des Langmaterials 3 ist vorgesehen, dass der erste Motor 13 zum Antreiben der ersten Ketteneinheit 6 und der zweite Motor 13' zum Antreiben der zweiten Ketteneinheit 6' synchron betrieben werden, so dass die beiden Ketteneinheiten mit gleicher Umlaufgeschwindigkeit v12, v12' bewegt werden.

Die Ketten 12, 12' weisen jeweils eine Vielzahl von miteinander verbundenen Kettengliedern 14, 14' auf. Jedes Kettenglied 14, 14' kann ein oder mehrere Reibkörper 15, 15' aufweisen, die ausgestaltet sind, um bei umlaufender Bewegung der Kettenanordnung 12, 12' mit dem Langmaterial 3 in Reibkontakt kommen und das so zwischen den beiden gegenüberliegenden Kettenanordnungen eingespannte Langmaterial 3 in Vorschubrichtung R3 bewegen. Die Reibkörper 15, 15' können jeweils einen Reibbelag aufweisen, dessen Reibmaterial so auf das Material des Langmaterials abgestimmt ist, dass zwischen dem Reibbelag und dem Langmaterial Haftreibung erzeugt wird. Zum Transportieren eines Langmaterials aus einem Stahlwerkstoff kann der Reibbelag insbesondere metallische Bestandteile wie Kupfer, Messing, Eisen, Grauguss, jeweils als Pulver oder Fasern, Mineralfasern und/oder Sulfide von Eisen, Kupfer, Antimon, Zink, Zinn, Molybdän aufweisen, die in ein Trägermaterial eingebettet sein können.

Die mit dem Langmaterial 3 jeweils in Reibkontakt befindlichen Kettenabschnitte 16, 16' werden jeweils von einer zugehörigen Anpresseinheit 7, 7' mit einer Anpresskraft F7, F7' in Richtung zum Langmaterial 3, das heißt in Normalrichtung des Langmaterials, beaufschlagt. Es ist erkennbar, dass die beiden Anpresseinheiten 7, 7' derart angeordnet sind, dass die Anpresskräfte F7, F7' aufeinander zu gerichtet sind. Die Stärke der Anpresskraft kann variabel eingestellt werden, so dass auch die Reibungskräfte zwischen den Reibkörpern 15, 15' und dem Langmaterial 3, welche von der Normalkraft abhängen, entsprechend verändert werden können.

Die Anpresseinheiten 7, 7' weisen jeweils mehrere Rollenkörper 17, 17' auf, die an einer Trägerplatte 18, 18' drehbar gelagert sind. Die Rollenkörper 17, 17' wirken auf eine dem Langmaterial 3 abgewandte Seite der Kettenglieder 14, 14' ein und beaufschlagen diese in Richtung zum Langmaterial 3. Die Anpresskräfte F7, F7' werden durch einen Stellantrieb (nicht dargestellt), beispielsweise durch eine hydraulische Maschine, erzeugt. Der Stellantrieb ist wiederum mit der elektronischen Steuerungseinheit steuerungstechnisch verbunden, mit der der Transportprozess gesteuert wird. Dabei ist insbesondere vorgesehen, dass die Größe der Anpresskräfte F7, F7' mittels der Steuerungseinheit zwischen einem Maximalwert und einem Minimalwert nach Bedarf variabel einstellbar ist. Vorzugsweise werden der Stellantrieb der ersten Anpresseinheit 7 und der Stellantrieb der zweiten Anpresseinheit 7' synchron betrieben, so dass die auf das Langmaterial von gegenüberliegenden Seiten einwirkenden Kräfte F7, F7' stets gleich groß sind. Die beiden Anpresseinheiten 7, 7' können an einem stehenden Bauteil, beispielsweise einem Gestell, in Vorschubrichtung R3 des Langmaterials 3 ortsfest gehalten sein. Nach einer alternativen Ausführungsform können die Anpresseinheiten 7, 7' auch mittels einer oder mehrerer Kraftantriebe, welche jeweils an beiden Anpresseinheiten abgestützt sind, direkt gegeneinander beaufschlagt werden.

Zum Erzeugen einer ausgleichenden Wirkung zwischen der Einlaufseite 4 und der Auslaufseite 5 der Transportvorrichtung ist je Kettenantriebseinheit 6, 6' eine Stelleinheit 8, 8' vorgesehen, mit der die zugehörige Kettenantriebseinheit in Längsrichtung L des Langmaterials 3 bewegt werden kann. Nach einer alternativen Ausführungsform kann auch eine einzige Stelleinheit vorgesehen sein, die antriebsmäßig auf beide Kettenantriebseinheiten wirkt.

Die Stelleinheiten 8, 8' sind jeweils in Form einer hydraulischen Kolben-Zylinder-Einheit gestaltet, wobei es sich versteht, dass auch andere Linearantriebe, wie beispielsweise ein Spindeltrieb verwendbar sind. Die Stelleinheiten 8, 8' sind längenveränderlich, wobei ein erster Abschnitt 19, 19' an einem ortsfesten Bauteil 20, 20' verbunden beziehungsweise abgestützt ist, und ein zweiter Abschnitt 21, 21' mit der zugehörigen Kettenantriebseinheit 6, 6' zur Kraftübertragung verbunden ist. Die Geschwindigkeit beziehungsweise Position der Stelleinheiten 8, 8' sind von mittels der Steuerungseinheit variabel einstellbar.

Die Stelleinheiten 8, 8' sind ausgestaltet, um die jeweils zugehörige Kettenantriebseinheit 6, 6' relativ zum ortfesten Bauteil 20, 20' zu bewegen, das heißt in oder entgegen der Vorschubrichtung R3 des Langmaterials 3. Bei Betätigung einer Stelleinheit 8, 8' wird eine Betätigungskraft F8, F8' auf den jeweiligen Kettentrieb 6, 6' ausgeübt, welche die Zugkraft des Langmaterials am Einlauf 4 beziehungsweise am Auslauf 5 beeinflusst. Ferner wird der Kettentrieb 6, 6' als Ganzes relativ zum ortsfesten Bauteil 20, 20' mit einer Stellgeschwindigkeit v6, v6' bewegt, welche der linearen Stellgeschwindigkeit v8, v8' der Stelleinheit 8, 8' entspricht. Bei Betätigung der Stelleinheiten 8, 8' überlagern sich dabei eine von den Kettenantriebseinheiten 6, 6' auf das Langmaterial 3 übertragene erste Bewegung beziehungsweise Geschwindigkeit v12, v12' und eine von den zwei Stelleinheiten 8, 8' auf die Kettenantriebseinheiten 6, 6' übertragene zweite Bewegung beziehungsweise Geschwindigkeit v8, v8' einander, woraus sich eine resultierende Bewegung beziehungsweise Geschwindigkeit v3 des Langmaterials 3 ergibt.

Gemäß einem möglichen Steuerungsverfahren kann vorgesehen sein, dass eine zumindest im Wesentlichen konstante Grundgeschwindigkeit v12, v12' des Langmaterials 3 mittels der Kettenantriebseinheiten 6, 6' eingestellt wird und, dass eine dynamische Anpassung der Geschwindigkeit zur Prozesssteuerung mittels der Stelleinheiten 8, 8' erfolgt. Hierfür eignen sich hydraulische Stelleinheiten besonders, welche dynamisch schnell steuerbar sind. Als Eingangsgrößen zur Regelung des Transportprozesses können beispielsweise die Geschwindigkeit v4 und/oder Zugkraft F4 an der Einlaufseiten und/oder die Geschwindigkeit v5 und/oder Zugkraft F5 an der Auslaufseite 5 verwendet werden. Hieraus lässt sich ein Sollwert für die von den Kettenantriebseinheiten 6, 6' auf das Langmaterial 3 einwirkenden Zugkraft bestimmen, nach der die Motoren 13, 13' der Kettenantriebseinheiten, die Antriebe der Anpresseinheiten 7, 7' und die Stelleinheiten 8, 8' entsprechend gesteuert werden.

Wird die Stelleinheit 8, 8' derart gesteuert, dass die Kettenantriebseinheit 6, 6' in Vorschubrichtung R3 bewegt wird, das heißt von der in Figur 1 gezeigten Position in die in Figur 2 gezeigte Position, wird an der Einlaufseite 4 des Langmaterials 3 eine höhere Zugkraft F4 erzeugt als an der Auslaufseite 5. Umgekehrt, das heißt, wenn die Kettenantriebseinheit 6, 6' von der Stelleinheit 8, 8' entgegen der Vorschubrichtung R3 bewegt wird, das heißt von der in Figur 2 gezeigten Position in die in Figur 1 gezeigte Position, ist die Zugkraft F4 an der Einlaufseite 4 niedriger als an der Auslaufseite 5. Die beiden Kettenantriebseinheiten 6, 6' können in dem ortsfesten Bauteil 20, 20' in Längsrichtung des Langmaterials 3 mittels geeigneter Führungen (nicht dargestellt) längsverschiebbar geführt sein.

Mit der erfindungsgemäßen Transportvorrichtung 2 beziehungsweise dem hiermit durchführbaren Verfahren lassen sich unterschiedliche Kräfte beziehungsweise Zugniveaus auf den beiden Prozessseiten 4, 5 variabel einstellen beziehungsweise steuern. Auf diese Weise wird eine Ausgleichsmöglichkeit der Weglängen und/oder Geschwindigkeiten zwischen Einlauf 4 und Auslauf 5 zur Verfügung gestellt.

### Bezugszeichenliste

- 2: Vorrichtung
- 3: Langmaterial
- 4: Einlauf
- 5: Auslauf
- 6, 6': Kettenantriebseinheit
- 7, 7': Anpresseinheit
- 8, 8': Stelleinheit
- 9, 9': Träger
- 10, 10': Antriebsrolle
- 11, 11': Umlenkrolle
- 12, 12': Kette
- 13, 13': Motor
- 14, 14': Kettenglied
- 15, 15: Reibkörper
- 16, 16': Kettenabschnitt
- 17, 17': Rollenkörper
- 18, 18': Trägerplatte
- 19, 19': Abschnitt
- 20, 20': ortsfesten Bauteil
- 21, 21': Abschnitt

- A: Achse
- F: Kraft
- L: Längsrichtung
- P: Prozess
- R: Vorschubrichtung

## Patentansprüche

1. Vorrichtung zum Transportieren von metallischem Langmaterial, insbesondere Bandmaterial, Drahtmaterial, Rohrmaterial oder Profilmaterial, umfassend:
eine steuerbare erste Kettenantriebseinheit (6) mit einer endlosen ersten Kette (12);
eine steuerbare zweite Kettenantriebseinheit (6') mit einer endlosen zweiten Kette (12');
wobei die erste und zweite Kettenantriebseinheit (6, 6') so angeordnet sind, dass das Langmaterial (3) zwischen der ersten und zweiten Kette (12, 12') unter Reibkontakt hindurchgeführt wird, so dass das Langmaterial bei Betrieb der ersten und zweiten Kettenantriebseinheiten (6, 6') in Bewegungsrichtung der mit dem Langmaterial (3) in Kontakt befindlichen Kettenabschnitte (16, 16') bewegt wird;
eine steuerbare erste Anpresseinheit (7), die ausgestaltet ist, um eine erste Anpresskraft (F7) auf die erste Kette (12) in Richtung zum Langmaterial (3) auszuüben;
eine steuerbare zweite Anpresseinheit (7'), die ausgestaltet ist, um eine zweite Anpresskraft (F7') auf die zweite Kette (12') in Richtung zum Langmaterial (3) auszuüben; **dadurch gekennzeichnet, dass** die Vorrichtung weiterhin zumindest eine steuerbare Stelleinheit (8, 8') umfasst, die mit zumindest einer der ersten und zweiten Kettenantriebseinheit (6, 6') mechanisch verbunden ist und ausgestaltet ist, um diese bei Betrieb in Längsrichtung (L) des Langmaterials (3) zu bewegen.

2. Vorrichtung nach Anspruch 1,
**dadurch gekennzeichnet,**
**dass** die erste Kettenantriebseinheit (6) relativ zur ersten Anpresseinheit (7) in Längsrichtung (L) des Langmaterials (3) bewegbar ist, wobei die erste Anpresseinheit (7) an einem stehenden Bauteil (20) in Längsrichtung des Langmaterials ortsfest gehalten ist.

3. Vorrichtung nach Anspruch 1 oder 2,
**dadurch gekennzeichnet,**
**dass** die zumindest eine Stelleinheit (8, 8') an einem stehenden Bauteil (20, 20') abgestützt ist und einen Linearantrieb, insbesondere eine hydraulische Kolben-Zylinder-Einheit aufweist, wobei ein erster Abschnitt (19, 19') des Linearantriebs mit dem stehenden Bauteil (20, 20') verbunden ist und ein zweiter Abschnitt (21, 21') mit der Kettenantriebseinheit (6, 6') verbunden ist, so dass eine Längenänderung des Linearantriebs eine Bewegung der Kettenantriebseinheit (6, 6') relativ zum stehenden Bauteil (20, 20') bewirkt.

4. Vorrichtung nach einem der Ansprüche 1 bis 3,
**dadurch gekennzeichnet,**
**dass** eine Steuereinheit (ECU) zum Steuern zumindest einer den Transport des Langmaterials (3) beeinflussenden physikalischen Prozessgröße vorgesehen ist, wobei die Steuereinheit mit der ersten und zweiten Kettenantriebseinheit (6, 6'), mit der ersten und zweiten Anpresseinheit (7, 7') sowie mit der zumindest einen Stelleinheit (8, 8') steuerungstechnisch verbunden ist.

5. Vorrichtung nach einem der Ansprüche 1 bis 4,
**dadurch gekennzeichnet,**
**dass** die erste Kettenantriebseinheit (6) und die zweite Kettenantriebseinheit (6'), die erste Anpresseinheit (7) und die zweite Anpresseinheit (7'), und/oder die zumindest eine Stelleinheit (8, 8') jeweils synchron betätigbar sind.

6. Vorrichtung nach einem der Ansprüche 1 bis 5,
**dadurch gekennzeichnet,**
**dass** die erste Kettenantriebseinheit (6), die erste Anpresseinheit (7) und die zumindest eine Stelleinheit (8) unabhängig voneinander steuerbar sind, so dass die Vorschubgeschwindigkeit (v3) des Langmaterials (3) unabhängig von der Anpresskraft (F7) der ersten Anpresseinheit (7) einstellbar ist.

7. Vorrichtung nach einem der Ansprüche 1 bis 6,
**dadurch gekennzeichnet,**
**dass** die erste Kettenantriebseinheit (6) eine Mehrzahl von umfangsverteilten Reibkörpern (15) aufweist, die dazu ausgestaltet ist, um mit dem Langmaterial (3) zu Transportzwecken in Reibkontakt gebracht zu werden.

8. Vorrichtung nach Anspruch 7,
**dadurch gekennzeichnet,**
**dass** die Reibkörper (15) jeweils einen Reibbelag aufweisen, welcher derart auf das Langmaterial abgestimmt ist, dass in allen Betriebszuständen Haftreibung gewährleistet ist.

9. Vorrichtung nach einem der Ansprüche 1 bis 8,
**dadurch gekennzeichnet,**
**dass** zumindest einige Komponenten der ersten Kettenantriebseinheit (6) aus Leichtbaumaterial, insbesondere aus Leichtmetall oder faserverstärktem Kunststoffmaterial hergestellt sind.

10. Anlage zur Verarbeitung von metallischem Langmaterial,
mit einem Werkzeug zum kontinuierlichen Bearbeiten des metallischen Langmaterials (3) in einer Vorschubrichtung (R3) des Langmaterials, **gekennzeichnet durch** eine Vorrichtung (2) zum Transportieren des Langmaterials nach einem der Ansprüche 1 bis 9.

11. Anlage nach Anspruch 10,
**dadurch gekennzeichnet,**
**dass** die Vorrichtung (2) zum Transportieren in Vorschubrichtung (R3) des Langmaterials (3) hinter dem Werkzeug angeordnet ist, so dass die Vorrichtung eine Zugkraft (F4) auf das Langmaterial ausübt, mit der das Langmaterial durch das Werkzeug gezogen wird.

12. Anlage nach Anspruch 10 oder 11,
**dadurch gekennzeichnet,**
**dass** das Werkzeug ein Walzwerkzeug, ein Schneidwerkzeug, ein Beschichtungswerkzeug, ein Profilierwerkzeug oder ein Prägewerkzeug ist.

13. Verfahren zum Transportieren von metallischem Langmaterial, insbesondere Bandmaterial, Drahtmaterial, Rohrmaterial oder Profilmaterial,
mittels einer Vorrichtung (2) mit zwei Kettenantriebseinheiten (6, 6'), zwischen denen das Langmaterial (3) unter Reibkontakt durchgeführt wird, zwei Anpresseinheiten (7, 7') zum Druckbeaufschlagen von Kettenabschnitten (16, 16') gegen das Langmaterial (3) sowie zumindest einer Stelleinheit (8, 8') zum Verschieben zumindest einer der zwei Kettenantriebseinheiten (8, 8') in Längsrichtung (L) des Langmaterials (3), mit den Schritten:
Antreiben der zwei Kettenantriebseinheiten (6, 6'), wobei Reibkörper (14, 14') der zwei Kettenantriebseinheiten mit dem Langmaterial in Reibkontakt treten, so dass das Langmaterial (3) zwischen einander gegenüberliegenden Reibkörpern (14, 14') eingespannt und gemeinsam mit diesen bewegt wird;
Ermitteln einer den Transport des Langmaterials (3) beeinflussenden physikalischen Prozessgröße (v4, F4; v5, F5) des Langmaterials vor und/oder hinter der Vorrichtung (2);
Berechnen einer den Transport des Langmaterials (3) beeinflussenden physikalischen Sollgröße (vsoll, Fsoll) des Langmaterials (3) unter Berücksichtigung der ermittelten physikalischen Prozessgröße (v4, F4; v5, F5);
Steuern der zumindest einen Stelleinheit (8, 8') auf Basis der berechneten physikalischen Sollgröße (vsoll, Fsoll) derart, dass die zwei Kettenantriebseinheiten (6, 6') in Längsrichtung (L) des Langmaterials (3) relativ zu einem ortsfesten Bauteil (20, 20') variabel verstellt werden, wobei eine von den zwei Kettenantriebseinheiten (6, 6') auf das Langmaterial übertragene erste Bewegung und eine von der zumindest einen Stelleinheit (8, 8') auf die zwei Kettenantriebseinheiten (6, 6') übertragene zweite Bewegung einander überlagern und eine resultierende Bewegung des Langmaterials (3) bewirken.

14. Verfahren nach Anspruch 13,
**dadurch gekennzeichnet,**
**dass** als erste physikalische Prozessgröße vor der Vorrichtung (2) die Einlaufgeschwindigkeit (v4) oder die Einlaufkraft (F4) des Langmaterials (3) ermittelt wird; und
**dass** als zweite physikalische Prozessgröße hinter der Vorrichtung (2) die Auslaufgeschwindigkeit (v5) oder die Auslaufkraft (F5) des Langmaterials (3) ermittelt wird.

15. Verfahren nach Anspruch 13 oder 14,
**dadurch gekennzeichnet,**
**dass** als weiterer Schritt vorgesehen ist:
Steuern eines von den zwei Anpresseinheiten (7, 7') mittelbar auf das Langmaterial (3) ausgeübten Anpressdrucks (F7, F7') unter Berücksichtigung zumindest einer der ermittelten physikalischen Prozessgrößen (v4, F4; v5, F5), wobei die zwei Kettenantriebseinheiten (6, 6'), die zwei Anpresseinheiten (7, 7') und die zumindest eine Stelleinheit (8, 8') insbesondere unabhängig voneinander gesteuert werden.

## Claims

1. A device for transporting elongated metal material, in particular strip material, wire material, pipe material or profiled material, comprising:
a controllable first chain drive unit (6) with a continuous first chain (12);
a controllable second chain drive unit (6') with a continuous second chain (12');
wherein the first and the second chain drive unit (6, 6') are arranged such that the elongated material (3) is passed through between the first and the second chain (12, 12') with frictional contact so that by operating the first and the second chain drive units (6, 6'), the elongated material is moved in a direction of movement of chain portions (16, 16') contacting the elongated material (3);
a controllable first pressure unit (7) configured to apply a first pressure force (F7) to the first chain (12) towards the elongated material (3);
a controllable second pressure unit (7') configured to apply a second pressure force (F7') to the second chain (12') towards the elongated material (3);
**characterised in that**
the device furthermore comprises at least one controllable adjusting unit (8, 8') which is mechanically connected to at least one of the first and second chain drive units (6, 6') and which is configured to move same in a longitudinal direction (L) of the elongated material (3) during operation.

2. Device according to claim 1,
**characterised in that** the first chain drive unit (6) is movable relative to the first pressure unit (7) in the longitudinal direction (L) of the elongated material (3), wherein the first pressure unit (7) is held so as to be fixed to a stationary component (20) in the longitudinal direction of the elongated material.

3. Device according to claim 1 or 2,
**characterised in that** the at least one adjusting unit (8, 8') is supported against a stationary component (20, 20') and comprises a linear drive, in particular a hydraulic piston cylinder unit, wherein a first portion (19, 19') of the linear drive is connected to the stationary component (20, 20') and a second portion (21, 21') is connected to the chain drive unit (6, 6'), so that a change in length of the linear drive effects a movement of the chain drive unit (6, 6') relative to the stationary component (20, 20').

4. Device according to any one of claims 1 to 3,
**characterised in that** a control unit (ECU) is provided for controlling at least one physical process value influencing the transport of the elongated material (3), wherein the control unit is controllingly connected to the first and to the second chain drive unit (6, 6'), to the first and to the second pressure unit (7, 7') and to the at least one adjusting unit (8, 8').

5. Device according to any one of claims 1 to 4,
**characterised in that** the first chain drive unit (6) and the second chain drive unit (6'), the first pressure unit (7) and the second pressure unit (7') and/or the at least one adjusting unit (8, 8') are respectively actuatable synchronously.

6. Device according to any one of claims 1 to 5,
**characterised in that** the first chain drive unit (6), the first pressure unit (7) and the at least one adjusting unit (8) can be controlled independently from one another, so that the speed of feed (v3) of the elongated material (3) is adjustable independently of the pressure force (F7) of the first pressure unit (7).

7. Device according to any one of claims 1 to 6,
**characterised in that** the first chain drive unit (6) comprises a plurality of circumferentially distributed friction members (15) which are configured to be brought into friction contact with the elongated material (3) for transport purposes.

8. Device according to claim 7,
**characterised in that** the friction members (15) each comprise a friction lining which is adapted to the elongated material such that static friction is ensured under all operational conditions.

9. Device according to any one of claims 1 to 8,
**characterised in that** at least some components of the first chain drive unit (6) are produced from light-weight material, in particular light metal or fibre-reinforced plastics.

10. A plant for processing elongated metal material,
having a tool for continuously working the elongated metal material (3) in a feed direction (R3) of the elongated material,
**characterised by** a device (2) for transporting the elongated material according to any one of claims 1 to 9.

11. Plant according to claim 10,
**characterised in that** the device (2) for transporting the elongated material (3) is arranged with respect to the feed direction (3) behind the tool, so that the device applies a tensile force (F4) to the elongated material by which the elongated material is pulled through the tool.

12. Plant according o claim 10 or 11,
**characterised in that** the tool is a rolling tool, a cutting tool, a coating tool, a profiling tool or an embossing tool.

13. A process of transporting elongated metal material, in particular strip material, wire material, pipe material or profiled material,
by a device (2) with two chain drive units (6, 6') between which the elongated material (3) is passed through under frictional contact, two pressure units (7, 7') for pressing chain portions (16, 16') against the elongated material (3) and at least one adjusting unit (8, 8') for displacing at least one of the two chain drive units (8, 8') in the longitudinal direction (L) of the elongated material (3),
comprising the following process steps:
driving the two chain drive units (6, 6'), wherein friction members (14, 14') of the two chain drive units come into frictional contact with the elongated material, so that the elongated material (3) is clamped in between opposed friction members (14, 14') and are moved jointly therewith;
determining a physical process value (v4, F4; v5, F5) of the elongated material influencing the transport of the elongated material (3) in front of and/or behind the device (2);
calculating a physical target value (vsoll, Fsoll) of the elongated material (3) which influences the transport of the elongated material (3), thereby taking into account the physical process value (v4, F4; v5, F5) as determined;
controlling the at least one adjusting unit (8, 8') on the basis of the calculated physical target value (vsoll, Fsoll) such that the two chain drive units (6, 6') are variably adjusted in the longitudinal direction (L) of the elongated material (3) relative to a stationary component (20, 20'), wherein a first movement transmitted by the two chain drive units (6, 6') to the elongated material and a second movement transmitted by the at least one adjusting unit (8, 8') to the two chain drive units (6, 6') superimpose one another and cause a resulting movement of the elongated material (3).

14. A process according to claim 13,
**characterised in that** a first physical process value determined in front of the device (2) is the entry speed (v4) or the entry force (F4) of the elongated material (3); and
that a second physical process value determined behind the device (2) is the exit speed (v5) or the exit force (F5) of the elongated material (3).

15. A process according to claim 13 or 14,
**characterised in that** a further step is provided:
controlling a pressure (F7, F7') applied by the two pressure units (7, 7') indirectly to the elongated material (3), thereby taking account at least one of the physical process values (v4, F4; v5, F5) already determined, wherein the two chain drive units (6, 6'), the two pressure units (7, 7') and the at least one adjusting unit (8, 8') are controlled in particular independently of one another.

## Revendications

1. Dispositif destiné à transporter une matière métallique allongée, notamment une matière en bande, une matière en fil métallique, une matière tubulaire ou une matière profilée, comprenant :
une première unité de transmission par chaîne (6) contrôlable, avec une première chaîne (12) sans fin ;
une deuxième unité de transmission par chaîne (6') contrôlable, avec une deuxième chaîne (12') sans fin ;
la première et la deuxième unités de transmission par chaîne (6, 6') étant placées de telle sorte que la matière allongée (3) passe entre la première et la deuxième chaînes (12, 12'), sous contact par friction, de sorte qu'en service de la première et de la deuxième unités de transmission par chaîne (6, 6'), la matière allongée soit déplacée dans le sens de déplacement des tronçons de chaînes (16, 16') qui se trouvent en contact par friction avec la matière allongée (3) ;
une première unité d'application d'une pression (7) contrôlable, qui est conçue pour exercer une première force de pression (F7) sur la première chaîne (12), dans la direction vers la matière allongée (3) ;
une deuxième unité d'application d'une pression (7') contrôlable, qui est conçue pour exercer une deuxième force de pression (F7') sur la deuxième chaîne (12'), dans la direction vers la matière allongée (3) ;
**caractérisé en ce que** le dispositif comprend par ailleurs au moins une unité de réglage (8, 8} contrôlable, qui est mécaniquement reliée avec au moins l'une des première et deuxième unités de transmission par chaîne (6, 6') et qui est conçue pour déplacer ces dernières en service dans la direction longitudinale (L) de la matière allongée (3).

2. Dispositif selon la revendication 1,
**caractérisé en ce que**
la première unité de transmission par chaîne (6) est déplaçable par rapport à la première unité d'application d'une pression (7) dans la direction longitudinale (L) de la matière allongée (3), la première unité d'application d'une pression (7) étant maintenue de manière stationnaire sur un élément constitutif (20) placé debout dans la direction longitudinale de la matière allongée.

3. Dispositif selon la revendication 1 ou 2,
**caractérisé en ce que**
l'au moins une unité de réglage (8, 8') s'appuie sur un élément constitutif (20, 20') placé debout et comporte un entraînement linéaire, notamment une unité hydraulique piston/cylindre, une première partie (19, 19') de l'entraînement linéaire étant reliée avec l'élément constitutif (20, 20') placé debout et une deuxième partie (21, 21') étant reliée avec l'unité de transmission par chaîne (6, 6'), de sorte qu'une variation en longueur de l'entraînement linéaire provoque un déplacement de l'unité de transmission par chaîne (6, 6') par rapport à l'élément constitutif (20, 20') placé debout.

4. Dispositif selon l'une quelconque des revendications 1 à 3,
**caractérisé en ce qu'**
il est prévu une unité de commande (ECU) destinée à commander au moins une variable de processus influençant le transport de la matière allongée (3), l'unité de commande étant reliée par technique de commande avec la première et la deuxième unités de transmission par chaîne (6, 6'), avec la première et la deuxième unités d'application d'une pression (7, 7'), ainsi qu'avec l'au moins une unité de réglage (8, 8').

5. Dispositif selon l'une quelconque des revendications 1 à 4,
**caractérisé en ce que**
la première unité de transmission par chaîne (6) et la deuxième unité de transmission par chaîne (6'), la première unité d'application d'une pression (7) et la deuxième unité d'application d'une pression (7'), et/ou l'au moins une unité de réglage (8, 8') peuvent être chacune actionnées de manière synchrone.

6. Dispositif selon l'une quelconque des revendications 1 à 5,
**caractérisé en ce que**
la première unité de transmission par chaîne (6), la première unité d'application d'une pression (7) et l'au moins une unité de réglage (8) peuvent être commandées indépendamment les unes des autres, de sorte que la vitesse d'avance (v3) de la matière allongée (3) soit réglable indépendamment de la force de pression (F7) de la première unité d'application d'une pression (7).

7. Dispositif selon l'une quelconque des revendications 1 à 6,
**caractérisé en ce que**
la première unité de transmission par chaîne (6) comporte une pluralité d'organes de friction (15) qui sont conçus pour être amenés en contact par friction avec la matière allongée (3), à des fins de transport.

8. Dispositif selon la revendication 7,
**caractérisé en ce que**
les organes de friction (15) comportent chacun un revêtement de friction, lequel est adapté à la matière allongée de sorte à assurer une friction statique dans tous les états de service.

9. Dispositif selon l'une quelconque des revendications 1 à 8,
**caractérisé en ce que**
au moins certains composants de la première unité de transmission par chaîne (6) sont fabriqués en un matériau de construction léger, notamment en métal léger ou en matière plastique renforcée par fibres.

10. Installation destinée à usiner une matière métallique allongée,
avec un outil pour l'usinage continu de la matière métallique allongée (3) dans une direction d'avance (R3) de la matière allongée,
**caractérisée par** un dispositif (2) destiné à transporter la matière allongée selon l'une quelconque des revendications 1 à 9.

11. Installation selon la revendication 10,
**caractérisée en ce que**
le dispositif (2) destiné à transporter dans la direction d'avance (R3) de la matière allongée (3) est placé derrière l'outil, de sorte que le dispositif exerce sur la matière allongée une force de traction (F4) avec laquelle la matière allongée est tirée à travers l'outil.

12. Installation selon la revendication 10 ou 11,
**caractérisée en ce que**
l'outil est un outil de laminage, un outil de coupe, un outil de revêtement, un outil de profilage ou un outil de gaufrage.

13. Procédé destiné à transporter une matière métallique allongée, notamment une matière en bande, une matière en fil de fer, une matière tubulaire ou une matière profilée
à l'aide d'un dispositif (2) avec deux unités de transmission par chaîne (6, 6'), entre lesquelles ont fait passer la matière allongée (3) sous contact par friction, deux unités d'application d'une pression (7, 7') pour exercer une pression sur des tronçons de chaînes (16, 16') contre la matière allongée (3), ainsi qu'au moins une unité de réglage (8, 8') pour déplacer au moins l'une des deux unités de transmission par chaîne (8, 8') dans la direction longitudinale (L) de la matière allongée (3),
comportant les étapes :
de l'entraînement des deux unités de transmission par chaîne (6, 6'), des organes de friction (14, 14') des deux unités de transmission par chaîne qui entrent en contact par friction avec la matière allongée, de sorte que la matière allongée (3) soit enserrée entre deux organes de friction (14, 14') situés en vis-à-vis et soit déplacée en commun avec ces derniers ;
de la détermination d'une variable de processus physique (v4, F4 ; v5, F5) de la matière allongée qui influence le transport de la matière allongée (3) à l'avant et/ou à l'arrière du dispositif (2) ;
du calcul d'une grandeur de consigne (vsoll, Fsoll) physique de la matière allongée (3) influençant le transport de la matière allongée (3), sous considération de la variable de processus physique (v4 ; F4 ; v5, F5) ;
de la commande d'au moins une unité de réglage (8, 8') sur la base de la grandeur de consigne (vsoll, Fsoll) physique calculée, de telle sorte que les deux unités d'entraînement par chaînes (6, 6') soit déplacées de manière variable dans la direction longitudinale (L) de la matière allongée (3), par rapport à un élément constitutif (20, 20') stationnaire, un premier déplacement transmis sur la matière allongée par l'une des deux unités d'entraînement par chaîne (6, 6') et un deuxième déplacement transmis par l'au moins une unité de réglage (8, 8') sur les deux unités de transmission par chaîne (6, 6') se superposant et provoquant un déplacement résultant de la matière allongée (3).

14. Procédé selon la revendication 13,
**caractérisé en ce qu'**
en tant que première variable de processus physique, à l'avant du dispositif (2), on détermine la vitesse d'entrée (v4) ou la force d'entrée (F4) de la matière allongée (3) ; et
**en ce qu'**en tant que deuxième variable de processus physique, à l'arrière du dispositif (2), on détermine la vitesse de sortie (v5) ou la force de sortie (F5) de la matière allongée (3).

15. Procédé selon la revendication 13 ou 14,
**caractérisé en ce qu'**
en tant qu'étape supplémentaire, il est prévu :
de commander la force de pression (F7, F7') exercée indirectement sur la matière allongée (3) par l'une des deux unités d'application d'une pression (7, 7'), sous considération d'au moins l'une des variables de processus physiques (v4, F4 ; v5, F5) déterminées, les deux unités de transmission par chaîne (6, 6'), les deux unités d'application d'une pression (7, 7') et l'au moins une unité de réglage (8, 8') étant commandées notamment indépendamment les uns des autres.
